# EUROPEAN PATENT APPLICATION

(11) **EP 4 163 801 A1**
(43) Date of publication of application: **12.04.2023**
(21) Application number: 21818032.1
(22) Date of filing: 04.06.2021
(51) Int. Cl.: G06F 16/27, G06N 20/00, G06Q 10/04

(54) **AUXILIARY IMPLEMENTATION METHOD AND APPARATUS FOR ONLINE PREDICTION USING MACHINE LEARNING MODEL**

(30) Priority: 05.06.2020 CN 202010508212
(71) Applicant: The Fourth Paradigm (Beijing) Tech Co Ltd, Beijing 100085 (CN)
(72) Inventor: CHEN, Qing, Beijing 100085 (CN); YANG, Huibin, Beijing 100085 (CN); YANG, Shouren, Beijing 100085 (CN); CHEN, Jie, Beijing 100085 (CN); WU, Tao, Beijing 100085 (CN); CHEN, Bo, Beijing 100085 (CN)
(74) Representative: Studio Torta S.p.A.
(86) International application number: PCT/CN2021/098349
(87) International publication number: WO 2021/244639

(57) **Abstract**

An auxiliary implementation method and apparatus for online prediction using a machine learning model. The method comprises: setting up an online data storage system and an offline data storage system, the online data storage system being used for storing at least part of the data used for implementing feature calculation in an online environment and the offline data storage system being used for storing at least part of the data used for implementing feature calculation in an offline environment (S110); respectively storing data in the online data storage system and the offline data storage system (S120); and, in response to an online prediction request, acquiring at least part of the data needed for online feature calculation from the online data storage system (S130). Thus, data synchronisation is performed between the online data storage system and the offline data storage system, ensuring that the data sources and processing procedure of online feature calculation and offline feature calculation are consistent.

## Description

### CROSS-REFERENCE TO RELATED APPLICATION

This application claims priority to and benefits of Chinese Patent Application No. 202010508212.6, filed June 5, 2020 and titled "method and device for assisting online prediction using a machine learning model".

### FIELD

The present disclosure generally relates to the field of artificial intelligence, and more particularly to a method and device for assisting online prediction using a machine learning model.

### BACKGROUND

Machine learning is an inevitable product of the research and development of artificial intelligence to a certain stage. It is devoted to improving the performance of a system itself based on experience and computation. In a computer system, the "experience" is usually presented in a form of "data", and a "model" can be generated from the data through a machine learning algorithm. That is, empirical data is provided to the machine learning algorithm, which can generate a model based on the empirical data. When facing a new situation, the model will provide a corresponding judgment, i.e., a prediction result.

When the machine learning model is used in actual industry, in order to apply the output machine learning model to online prediction, data in various formats from complex sources may be encountered, which brings great difficulties to the online prediction service using the machine learning model.

This is because a variety of feature construction manners may be used when the model is trained offline, which not only involves data of various aspects, but often uses some statistical features (such as timing characteristics). How to ensure the consistency of data source and calculation process between online feature calculation and offline feature calculation is an urgent problem to be solved at present.

### SUMMARY

Explanatory embodiments of the present disclosure are intended to provide a solution for assisting online prediction using a machine learning model to ensure the consistency of the data source between online feature calculation and offline feature calculation.

According to a first aspect of the present disclosure, a method for assisting online prediction using a machine learning model is provided. The method includes: setting an online data storage system and an offline data storage system, the online data storage system being configured to store at least part of data used for feature calculation in an online environment, and the offline data storage system being configured to store at least part of data used for feature calculation in an offline environment; storing data into each of the online data storage system and the offline data storage system; acquiring at least part of the data required by online feature calculation from the online data storage system, in response to an online prediction request.

According to a second aspect of the present disclosure, a device for assisting online prediction using a machine learning model is provided. The device includes: an online data storage system, configured to store at least part of data used for feature calculation in an online environment; an offline data storage system, configured to store at least part of data used for feature calculation in an offline environment; a feature data acquiring element, configured to acquire data and store the data into each of the online data storage system and the offline data storage system; and a real-time feature calculation module, configured to acquire at least part of the data required by online feature calculation from the online data storage system, in response to an online prediction request.

According to a third aspect of the present disclosure, a system is provided. The system includes at least one computing device and at least one storage device having stored therein instructions. The instructions, when run by the at least one computing device, cause the at least one computing device to execute the method as described in the first aspect of the present disclosure.

According to a fourth aspect of the present disclosure, a computer-readable storage medium is provided. The computer-readable storage medium has stored therein instructions that, when run by at least one computing device, cause the at least one computing device to execute the method as described in the first aspect of the present disclosure.

According to a fifth aspect of the present disclosure, a computing device is provided. The computing device includes a processor and a memory. The memory has stored therein a set of computer executable instructions, and the set of computer executable instructions, when executed by the processor, causes the processor to: set an online data storage system and an offline data storage system, the online data storage system being configured to store at least part of data used for feature calculation in an online environment, and the offline data storage system being configured to store at least part of data used for feature calculation in an offline environment; store data into each of the online data storage system and the offline data storage system; acquire at least part of the data required by online feature calculation from the online data storage system, in response to an online prediction request.

According to the method and device for assisting online prediction using a machine learning model according to exemplary embodiments of the present disclosure, data synchronization between the online data storage system and the offline data storage system can ensure the consistency of the data source between the online feature calculation and offline feature calculation. In optional embodiments, the online feature calculation and the offline feature calculation are performed using the processing scripts in the unified script language, which ensures the consistency of the calculation processes.

### BRIEF DESCRIPTION OF THE DRAWINGS

At least one of these and other aspects and advantages of the present disclosure will become apparent and more readily appreciated from the following descriptions on embodiments of the present disclosure made with reference to the drawings, in which:
FIG. 1 shows a flowchart of a method for assisting online prediction using a machine learning model according to explanatory embodiments of the present disclosure;
FIG. 2 shows a schematic block diagram of a feature calculation framework according to explanatory embodiments of the present disclosure; and
FIG. 3 shows a schematic block diagram of a device for assisting online prediction using a machine learning model according to explanatory embodiments of the present disclosure.

### DETAILED DESCRIPTION

In order to enable those skilled in the art to better understand the present disclosure, explanatory embodiments of the present disclosure will be further illustrated in detail below with reference to the accompanying drawings and specific examples.

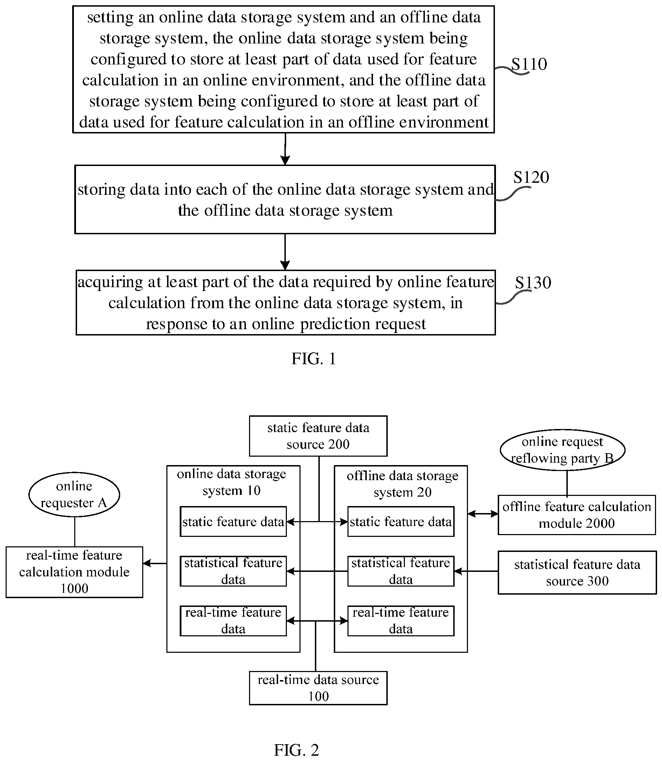

FIG. 1 shows a flowchart of a method for assisting online prediction using a machine learning model according to explanatory embodiments of the present disclosure. The method shown in FIG. 1 may be implemented entirely in software through computer programs, and it may also be executed by a specially configured computing device.

Referring to FIG. 1, in step S110, an online data storage system and an offline data storage system are set.

The online data storage system is configured to store at least part of data used for feature calculation in an online environment, that is, the data stored in the online data storage system is used for online feature calculation. The offline data storage system is configured to store at least part of data used for feature calculation in an offline environment, that is, the data stored in the offline data storage system is used for offline feature calculation. Specific implementation forms of the online data storage system and the offline data storage system are not limited in the present disclosure. For example, the online data storage system may be a memory database, and the offline data storage system may be a distributed data storage system.

In step S120, data is stored into each of the online data storage system and the offline data storage system.

A data synchronization mechanism for the online data storage system and the offline data storage system may be set in embodiments of the present disclosure. Based on the data synchronization mechanism, the acquired data is stored into each of the online data storage system and the offline data storage system. As a result, data synchronization between the online data storage system and the offline data storage system can ensure the consistency of data sources between the online feature calculation and the offline feature calculation.

Considering the complexity of data sources, in the present disclosure, data (such as feature data) used in a feature construction process of the machine learning model may be classified into multiple types of data. For example, in the present disclosure, the data may be classified into three types, i.e., static feature data, statistical feature data and real-time data. The static feature data refers to feature data that does not change or does not change frequently. For example, a user's education background, address, gender and the like that does not change over time or does not change frequently over time may be considered as static data. The real-time data refers to data that is generated in real time, such as the user's current geographic location, the type of network used and other data that are generated continuously with time and space changes. The statistical feature data refers to feature data that is obtained by performing statistics on data within a predetermined period of time by a predetermined statistical manner. The data within the predetermined period of time generally refers to earlier data than the data generated in real time. For example, it may refer to the data within a certain past time window.

At least one of the online data storage system and the offline data storage system may be configured to store multiple types of data. In the present disclosure, a corresponding data acquisition manner may be set for each type of data, such that different types of data may be acquired using the respective data acquisition manners. As an example, the data may be classified into static feature data, statistical feature data and real-time data, and the acquisition manners of these three types of data will be described in more detail below.

The data acquisition manner corresponding to the static feature data may be that the static feature data is periodically acquired. For example, the static feature data may be stored in a static feature data source. In embodiments of the present disclosure, the data in the static feature data source may be synchronously sent to the online data storage system and the offline data storage system, or the data in the static feature data source may be sent to one (i.e., the online data storage system or the offline data storage system) of the online data storage system and the offline data storage system, which will synchronize the data to the other one. That is, the static feature data in the static feature data source may be sent to the online data storage system, and the online data storage system will send (regularly) the static feature data to the offline data storage system; or the static feature data in the static feature data source may be sent to the offline data storage system, and the offline data storage system will send (regularly) the static feature data to the online data storage system; or the static feature data in the static feature data source may be sent separately (i.e., synchronously) to the online data storage system and the offline data storage system. In this way, the synchronization of the static feature data between the online data storage system and the offline data storage system may be realized.

The data acquisition manner corresponding to the statistical feature data may be that the statistical feature data is obtained by performing statistics on data within a predetermined period of time. For example, the data within the predetermined period of time may be stored in a statistical feature data source. In embodiments of the present disclosure, the data within the predetermined period of time may be sent from the statistical feature data source to the offline data storage system, and an offline feature calculation module performs statistic on the data within the predetermined period of time in the offline data storage system to obtain the statistical feature data. After the statistical feature data is obtained, the statistical feature data may be stored in the offline data storage system, and the offline data storage system will send the statistical feature data to the online data storage system. Among others, the offline feature calculation module is responsible for the offline feature calculation. In this way, the statistical feature data may be pre-calculated by the offline feature calculation module, and is synchronized between the online data storage system and the offline data storage system.

The data acquisition manner corresponding to the real-time data may be acquiring data generated in real time. For example, the real-time data may be stored in a real-time data source. In embodiments of the present disclosure, the data in the real-time data source may be synchronously sent to the online data storage system and the offline data storage system; or the data in the real-time data source may be sent to one (i.e., the online data storage system or the offline data storage system) of the online data storage system and the offline data storage system, which will synchronize the data to the other one. That is, the real-time data in the real-time data source may be sent to the online data storage system, and the online data storage system will send the real-time data to the offline data storage system; or the real-time data in the real-time data source may be sent to the offline data storage system, and the offline data storage system will send the real-time data to the online data storage system; or the real-time data in the real-time data source may be sent separately to the online data storage system and the offline data storage system. In this way, the real-time data may be synchronized between the online data storage system and the offline data storage system.

It should be noted that the real-time data stored in the offline data storage system is generally used for the offline feature calculation, that is, real-time data at time tl stored in the offline data storage system is generally used for offline feature calculation at a later time t2. That is to say, when performing the offline feature calculation based on the real-time data, the real-time data has lost its real-time nature. Therefore, the real-time data in the offline data storage system belongs to offline data. The expression "real-time" in the term "real-time data" is only used for naming, and in fact, it is no longer real-time.

In step S 130, in response to an online prediction request, at least part of the data required by online feature calculation is acquired from the online data storage system.

In embodiments of the present disclosure, the machine learning model obtained by training in the offline environment may be deployed online to provide an online prediction service based on the machine learning model.

In an embodiment of the present disclosure, the machine learning model may be applied to any of the following scenarios: online content (such as news, advertisements, music, etc.) recommendation; credit card fraud detection; abnormal behavior detection; intelligent marketing; smart investment consultation; network traffic analysis.

More specifically, the applicable scenarios of the machine learning model in embodiments of the present disclosure include but are not limited to: image processing scenarios, speech recognition scenarios, natural language processing scenarios, automatic control scenarios, intelligent question answering scenarios, business decision-making scenarios, service recommendation scenarios, search scenarios, and abnormal behavior detection scenarios.

The image processing scenarios include: optical character recognition (OCR), face recognition, object recognition and image classification. More specifically, for example, the OCR may be applied to bill (such as invoice) recognition, handwritten character recognition and the like, the face recognition may be applied to security and other fields, the object recognition may be applied to traffic sign recognition in an automatic driving scenario, and the image classification may be applied to functions like "photographing shopping", "looking for the same style" on e-commerce platforms.

The speech recognition scenarios include products that can conduct human-machine interaction through voices, such as voice assistants of mobile phones (such as Siri of iPhone), smart speakers, etc.

The natural language processing scenarios include: text review (such as review of contracts, legal documents, customer service records, etc.), spam content identification (such as spam short message identification), and text classification (emotions, intentions, themes, etc.).

The automatic control scenarios include predictions on regulation operations of a mining device, a wind turbine generator system or an air conditioning system. Specifically, for the mining device, a set of regulation operations with a high mining rate may be predicted; for the wind turbine generator system, a set of regulation operations with a high power generation efficiency may be predicted; and for the air conditioning system, a set of regulation operations that meet the usage demand and at the same time save energy may be predicted.

The intelligent question answering scenarios include: chat robots and intelligent customer service.

The business decision-making scenarios include scenarios in fields of financial technology, medical fields and municipal fields.

The fields of financial technology include: marketing (such as coupon use prediction, advertising click behavior prediction, user portrait excavation, etc.) and customer acquisition, anti-fraud, anti-money laundering, underwriting and credit scoring, and commodity price prediction.

The medical fields include: disease screening and prevention, personalized health management and auxiliary diagnosis.

The municipal fields include: social governance, supervision and law enforcement, resource, environment and facility management, industrial development and economic analysis, public services and livelihood security, and smart cities (allocation and management of various urban resources such as public transport, online car hailing, bike sharing, etc.).

The service recommendation scenarios include: recommendation on news, advertising, music, consulting, video and financial products (such as wealth management, insurance, etc.).

The search scenarios include: webpage search, image search, text search, video search, etc.

The abnormal behavior detection scenarios include: abnormal power consumption detection from customers of State Grid Corporation, malicious network traffic detection, and abnormal behavior detection in operation logs.

An online requester may be those who use the online prediction service, such as users targeted by the online prediction service, and the online requester may issue an online prediction request. In response to online prediction request, at least part of the data required by the online feature calculation is obtained from the online data storage system, an online estimation sample is constructed based on the data acquired from the online data storage system, and the online estimation sample is subjected to prediction using the online prediction service based on the machine learning model to obtain an online prediction result. As an example, the acquired data may be processed using a first processing script to obtain the online estimation sample.

As mentioned above, the data in the online data storage system may be classified into static feature data, statistical feature data and real-time data. In response to the online prediction request, any one or more types of data can be read from the three types of data stored in the online data storage system for feature calculation and for splicing of the online prediction sample. For example, at least one of the static feature data and the statistical feature data related to the online prediction request can be read from the online data storage system as partial feature data for online prediction. For another example, the real-time data related to the online prediction request can also be read from the online data storage system to calculate real-time feature data, which is used as partial feature data for online prediction.

As an example, the online prediction request may include partial feature data required by a prediction on a target object. The feature data for the online prediction may be composed of the following three parts: the feature data in the online prediction request; at least one of the static feature data and the statistical feature data; and the real-time feature data calculated based on the real-time data. In embodiments of the present disclosure, the first processing script may be used to perform real-time feature calculation on the acquired real-time data to obtain the real-time feature data; and then the real-time feature data, the at least one of the static feature data and the statistical feature data, and the feature data in the online prediction request are calculated or spliced to obtain the online estimation sample. Among others, the first processing script may be executable codes that are obtained by translation based on the same script language as a second processing script, the second processing script is a processing script used for feature processing in the offline environment, while the first processing script is executable in a different environment from that of the second processing script. That is to say, the first processing script may be regarded as codes that are translated from a script language and executable in the online environment, and the second processing script may be regarded as codes that are translated from this script language and executable in the offline environment. In this way, the online feature calculation and the offline feature calculation are performed based on a unified script language, which can ensure the consistency of the processing process between the online feature calculation and the offline feature calculation.

In embodiments of the present disclosure, an online feedback result on the online prediction request may be acquired, and the online feedback result is a real feedback result. The online feedback result is spliced with feature data obtained by processing data from the offline data storage system using the second processing script to obtain a training sample. The second processing script and the first processing script may be codes that are obtained by translation based on the same script language and executable in different environments. Afterwards, the machine learning model is trained using the training sample.

As described above, the data in the offline data storage system may be classified into static feature data, statistical feature data and real-time data. In embodiments of the present disclosure, according to an actual condition, any one or more types of data can be read from the three types of data stored in the offline data storage system for feature calculation and for splicing of the training sample. For example, at least one of the static feature data and the statistical feature data can be read from the offline data storage system as partial feature data of the training sample. For another example, the real-time data can also be read from the offline data storage system to calculate real-time feature data, which is used as partial feature data of the training sample. Among others, as described above, the real-time data stored in the offline database, although is named as such, has actually lost its real-time nature.

As an example, the online prediction request may include partial feature data, and the data acquired from the offline data storage system may include the static feature data, the statistical feature data, and the real-time data. Among others, the real-time data is previously generated in real time and is stored in the offline data storage system, and the real-time data here has lost its real-time nature. In embodiments of the present disclosure, the real-time data may be subjected to the offline feature calculation using the second processing script to obtain real-time feature data, and then the online feedback result, the real-time feature data, the static feature data, the statistical feature data and the partial feature data in the online prediction request are calculated or spliced to obtain the training sample. In an embodiment of the present disclosure, the data acquired (i.e., reflowed) from the online prediction request can also be verified to check whether the schema of the data reflowed from the online prediction request is consistent with the data in the online prediction request. After the verification is passed, the subsequent feature construction is performed to construct the training sample.

The method according to embodiments of the present disclosure may be implemented as feature calculation framework. FIG. 2 shows a schematic block diagram of a feature calculation framework according to explanatory embodiments of the present disclosure.

As shown in FIG. 2, the whole feature calculation framework may include, but not limited to, an online data storage system 10, an offline data storage system 20, a real-time feature calculation module 1000, and an offline feature calculation module 2000. In an embodiment, multiple data sources as shown in FIG. 2, such as a real-time data source 100, a static feature data source 200 and a statistical feature data source 300, may also be included.

The online data storage system 10 may be, for example, a memory database, and the offline data storage system 20 may be, for example, a distributed data storage system. Three types of data, i.e., static feature data, statistical feature data and real-time data, may be constructed in each of the online data storage system 10 and the offline data storage system 20, and a corresponding acquisition manner may be set for each type of data.

The feature calculation framework as shown in FIG. 2 may be applied to an online prediction system. The online prediction system can provide the online prediction service based on the machine learning model. The online requester A as shown in FIG. 2 may be the user of the online prediction service. The online requester A may issue an online prediction request, which may include certain features of an object requested to be predicted (i.e., the target object as mentioned above). For example, an online prediction request for a certain piece of news may include some descriptive features of the piece of news itself.

The real-time data source 100 is configured to collect data generated in real time and reflow it to the online data storage system 10 and the offline data storage system 20. The data generated in real time may be, for example, news that is constantly recommended online recently.

The static feature data source 200 is configured to store some data that does not change frequently over time, such as a user's education background, address and the like, which may be relatively regarded as static feature data. The static feature data may be sent to the online data storage system 10 and the offline data storage system 20 at the same time and regularly synchronized between the online data storage system 10 and the offline data storage system 20; or the static feature data may be sent to one of the online data storage system 10 and the offline data storage system 20, which will regularly synchronize the static feature data to the other one.

The statistical feature data source 300 may be configured to store some data in some statistical time windows that are earlier than the data generated in real time, such as a user's news browsing information in the last 30 days. The statistical feature data source 300 puts relevant data into the offline data storage system 20, relevant statistical calculation is completed by the offline feature calculation module 2000, and a result of the statistical calculation is put into the offline data storage system 20 as the statistical feature data, and is synchronized to the online data storage system 10 by the offline data storage system 20. That is to say, the statistical feature data is calculated in advance as a part of features, which are ready when the real-time feature calculation module 1000 executes the real-time feature calculation.

An online request reflowing party B is configured to collect online prediction requests that already have feedback results. The online request reflowing party B may splice the feature data in the online prediction request with the feedback results to form a main training table, and transmit it to the offline feature calculation module 2000.

In the present disclosure, different parts may physically belong to the same source. For example, the online requester A and the online request reflowing party B may both be invoked and called by an online business service, and the static feature data source 200 and the statistical feature data source 300 may both be business databases.

When the online prediction system (for example, the real-time feature calculation module 1000) receives an online prediction request from the online requester A, it can extract partial feature data from contents included in the online prediction request. In an embodiment, at least one of the static feature data and the statistical feature data may be read from the online data storage system 10 as a part of the feature data. In an embodiment, relevant real-timely generated data (for example, three pieces of recommended data recently accepted) may also be read from the online data storage system 10 to calculate the real-time feature data, and then these parts of feature data are calculated or spliced to obtain the online estimation sample.

The offline feature calculation module 2000 may be used to complete the calculation of the statistical feature data, and may also be used to complete the generation of the offline training sample. Similar to the online feature construction manner, the feature data of the offline training sample may include the following types: a. feature data reflowed from the online prediction request; b. at least one of the static feature data and the statistical feature data; c. the real-time feature data calculated based on real-timely generated data (has lost its real-time nature here). In addition, a mark of the training sample is a real user feedback reflowed from the online prediction request (for example, whether or not the recommended content is accepted).

In an embodiment, for the offline training sample, the feature data reflowed from the online request needs to be verified to see if its data schema is consistent with the data schema of the data in the online prediction request, and the subsequent feature construction is performed only when the verification is successful.

In addition, when the offline feature calculation module 2000 calculates the statistical feature data, it may perform full-scale computation and data regular synchronization; or it may perform incremental computation and streaming update.

The real-time feature calculation module 1000 and the offline feature calculation module 2000 are based on the unified script language to make calculation, and this language is translated into codes executable in an online environment and codes executable in an offline environment, so as to complete the splicing or calculation operation of the obtained features.

In summary, in the online data storage system for real-time feature calculation, three types of data may be constructed in embodiments of the present disclosure: the static feature data, the statistical feature data within a long time window, and the real-time generated data, and a corresponding acquisition manner is set for each type of data. When performing the real-time feature calculation, the feature calculation may be performed based on at least one of the three types of data.

Through the synchronization mechanism between the online data storage system and the offline data storage system, the consistency of the data source between the online feature calculation and the offline feature calculation can be ensured. Among others, the static feature data may be synchronized regularly. The statistical feature data may be regularly calculated in a full-scale computation manner by the offline feature calculation module and synchronized to the memory database; or may be calculated in an incremental stream computation manner and placed in the distributed data storage system, and flowed into the memory database. The real-timely generated data may be introduced into the online data storage system and the offline data storage system separately by a reflowing mechanism.

By setting a unified script language for feature calculations, the online calculation logic and the offline calculation logic can be kept consistent, i.e., the calculation logic of the real-time feature calculation and the calculation logic of the offline feature calculation are based on a unified script language.

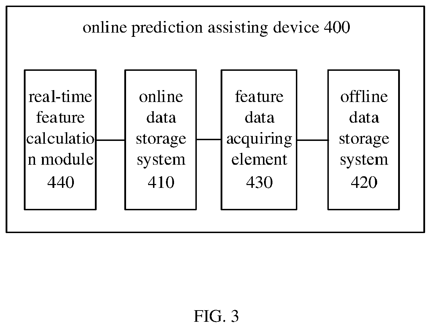

The method for assisting online prediction using a machine learning model according to embodiments of the present disclosure may also be realized by a device for assisting online prediction using a machine learning model. FIG. 3 shows a schematic block diagram of a device for assisting online prediction using a machine learning model according to explanatory embodiments of the present disclosure. Among others, functional units of the device for assisting online prediction using the machine learning model may be implemented by hardware, software or a combination of the hardware and software that realizes the principle of the present disclosure. It can be understood by those skilled in the related art that the functional units described in FIG. 3 may be combined or may be divided into subunits to realize the above-described principle of the present disclosure. Therefore, the descriptions made herein can support any possible combination, division, or more specific limitation of the functional units described herein.

In the following, the functional units that may be possessed by the device for assisting online prediction using the machine learning model as well as operations that can be performed by individual functional units will be described in brief. For details involved therein, please refer to the relevant descriptions made above, which will not be elaborated here.

Referring to FIG. 3, the device 400 for assisting online prediction using a machine learning model includes an online data storage system 410, an offline data storage system 420, a feature data acquiring element 430, and a real-time feature calculation module 440.

The online data storage system 410 is configured to store at least part of data used for feature calculation in an online environment. The offline data storage system 420 is configured to store at least part of data used for feature calculation in an offline environment. The feature data acquiring element 430 is configured to acquire data and store the data into each of the online data storage system and the offline data storage system. The real-time feature calculation module 440 is configured to acquire at least part of the data required by online feature calculation from the online data storage system, in response to an online prediction request.

In embodiments of the present disclosure, multiple types of data may be constructed in at least one of the online data storage system 410 and the offline data storage system 420. At least one of the online data storage system 410 and the offline data storage system 420 may be configured to store multiple types of data, and the feature data acquiring element 430 may set corresponding data acquisition manners for the multiple types of data respectively, and acquire the multiple types of data using the corresponding data acquisition manners respectively.

In an example, the data may include three types of data, i.e., static feature data, statistical feature data and real-time data. In an example, the data includes the static feature data, and the data acquisition manner corresponding to the static feature data is acquiring the static feature data periodically. The feature data acquiring element 430 may include a static feature data source, and the static feature data source is configured to acquire the static feature data, and send the static feature data to the online data storage system, which sends the static feature data to the offline data storage system; or the static feature data source is configured to send the static feature data to the offline data storage system, which sends the static feature data to the online data storage system; or the static feature data source is configured to send the static feature data to each of the online data storage system and the offline data storage system.

In an example, the data includes the statistical feature data, and the data acquisition manner corresponding to the statistical feature data is performing statistic on data within a predetermined period of time to obtain the statistical feature data. The feature data acquiring element 430 may include a statistical feature data source, and the statistical feature data source is configured to acquire data within a predetermined period of time. The device 400 may further include an offline feature calculation module, the statistical feature data source may be configured to send the data within the predetermined period of time to the offline data storage system 420, the offline feature calculation module is configured to perform statistic on the data within the predetermined period of time in the offline data storage system 420 to obtain the statistical feature data, and store the statistical feature data to the offline data storage system 420, and the offline data storage system 420 is configured to send the statistical feature data to the online data storage system 410.

In an example, the data includes the real-time data, and the data acquisition manner corresponding to the real-time data is acquiring data generated in real time. The feature data acquiring element 430 includes a real-time data source, and the real-time data source is configured to acquire the real-time data, and send the real-time data to the online data storage system 410, which sends the real-time data to the offline data storage system 420; or the real-time data source is configured to send the real-time data to the offline data storage system 420, which sends the real-time data to the online data storage system 410; or the real-time data source is configured to send the real-time data to each of the online data storage system 410 and the offline data storage system 420.

In an example, the device 400 may further include an online prediction module. The real-time feature calculation module 440 may be configured to process the acquired data using a first processing script to obtain an online estimation sample, and the online prediction module may be configured to perform a prediction on the online estimation sample using an online prediction service based on the machine learning model to obtain an online prediction result.

In an example, the online prediction request includes partial feature data required by a prediction on a target object, the acquired data may include the static feature data, the statistical feature data and the real-time data, the real-time feature calculation module 440 may be configured to perform real-time feature calculation on the real-time data using the first processing script to obtain real-time feature data, and perform a calculation on or splice the real-time feature data, the static feature data, the statistical feature data and the partial feature data included in the online prediction request to obtain the online estimation sample.

In an example, the device 400 may further include: a reflowing module, an offline feature calculation module and an offline training module. The reflowing module is configured to acquire an online feedback result on the online prediction request. The offline feature calculation module is configured to splice the online feedback result and feature data obtained by processing data from the offline data storage system using a second processing script to obtain a training sample. Among others, the second processing script and the first processing script are obtained by translation based on a same script. The offline training module is configured to train the machine learning model using the training sample.

In an example, the online prediction request includes partial feature data required by a prediction on a target object, the data acquired from the offline data storage system includes the static feature data, the statistical feature data and the real-time data, the offline feature calculation module may be configured to perform offline feature calculation on the real-time data using the second processing script to obtain real-time feature data, and perform a calculation on or splice the online feedback result, the real-time feature data, the static feature data, the statistical feature data and the partial feature data included in the online prediction request to obtain the training sample.

In an example, the device 400 may further include: a verifying module, configured to verify data acquired from the online prediction request.

It should be understood that for the specific implementations of the device 400 for assisting online prediction using a machine learning model according to explanatory embodiments of the present disclosure, reference can be made to the related descriptions on the method for assisting online prediction using a machine learning model made hereinbefore with reference to FIG. 1 and FIG. 2, which will not be elaborated here.

The method and device for assisting online prediction using a machine learning model according to explanatory embodiments of the present disclosure are described above with reference to FIG. 1 to FIG. 3. It should be understood that the above method may be realized by a program recorded on a computer-readable medium. For example, according to explanatory embodiments of the present disclosure, a computer-readable storage medium having stored therein instructions may be provided, and on the computer-readable storage medium, there is recorded a computer program for executing the method for assisting online prediction using a machine learning model (as shown in FIG. 1) according to the present disclosure.

The computer program in the above computer-readable storage medium can be run in an environment deployed in a computer device such as a client, a host, an agent device, a server, etc. It should be noted that the computer program may be used to perform additional steps other than those shown in FIG. 1, or perform more specific processing when performing these steps. Contents on these additional steps and the further processing have been described with reference to FIG. 1, which will not be elaborated here to avoid repetition.

It should be noted that the device for assisting online prediction using a machine learning model according to explanatory embodiments of the present disclosure may completely rely on the running of the computer program to achieve the corresponding functions, that is, individual modules or systems of the device correspond to respective steps in the functional architecture of the computer program, so that the entire device is called through a special software package (for example, a lib library) to achieve the corresponding functions.

On the other hand, the individual modules or systems shown in FIG. 3 can also be implemented by hardware, software, firm ware, middleware, microcode, or any combination thereof. When implemented in software, firmware, middleware or microcode, the program code or code segment for performing the corresponding operation may be stored in a storage medium like a computer-readable storage medium, so that a processor can perform the corresponding operation by reading and running the corresponding program code or code segment.

For example, explanatory embodiments of the present disclosure may also be implemented as a computing device. The computing device includes a storage component and a processor, the storage component has stored therein a set of computer executable instructions that, when run by the processor, causes the processor to perform the method for assisting online prediction using a machine learning model as described above.

The storage component is a memory. Causing the processor to perform the method for assisting online prediction using a machine learning model as described above is to cause the processor to perform the following steps: setting an online data storage system and an offline data storage system, the online data storage system being configured to store at least part of data used for feature calculation in an online environment, and the offline data storage system being configured to store at least part of data used for feature calculation in an offline environment; storing data into each of the online data storage system and the offline data storage system; and acquiring at least part of the data required by online feature calculation from the online data storage system, in response to an online prediction request.

At least one of the online data storage system and the offline data storage system may be configured to store multiple types of data, and the processor is further configured to: set a data acquisition manner corresponding to each type of data respectively; and acquiring each type of data using the data acquisition manner corresponding to the type of data.

The data may include static feature data, the static feature data does not change or does not change frequently, and the data acquisition manner corresponding to the static feature data is acquiring the static feature data periodically.

The static feature data may be stored in a static feature data source, and the storing data into each of the online data storage system and the offline data storage system may include: sending the static feature data in the static feature data source to the online data storage system, which sends the static feature data to the offline data storage system; or sending the static feature data in the static feature data source to the offline data storage system, which sends the static feature data to the online data storage system; or sending the static feature data in the static feature data source to each of the online data storage system and the offline data storage system.

The data may include statistical feature data, and the statistical feature data is obtained from data within a predetermined period of time by a predetermined statistical manner, and the data acquisition manner corresponding to the statistical feature data is performing statistic on data within a predetermined period of time to obtain the statistical feature data.

The data within the predetermined period of time may be stored in a statistical feature data source, and the storing feature data into each of the online data storage system and the offline data storage system may include: sending the data within the predetermined period of time in the statistical feature data source to the offline data storage system, performing statistic on the data within the predetermined period of time in the offline data storage system by an offline feature calculation module to obtain the statistical feature data; and storing the statistical feature data into the offline data storage system, and sending the statistical feature data to the online data storage system by the offline data storage system.

The data may include real-time data, the real-time data is generated in real time, and the data acquisition manner corresponding to the real-time data is acquiring data generated in real time.

The real-time data may be stored in a real-time data source, and the storing data into each of the online data storage system and the offline data storage system may include: sending the real-time data in the real-time data source to the online data storage system, which sends the real-time data to the offline data storage system; or sending the real-time data in the real-time data source to the offline data storage system, which sends the real-time data to the online data storage system; or sending the real-time data in the real-time data source to each of the online data storage system and the offline data storage system.

The processor may be further configured to: process the acquired data using a first processing script to obtain an online estimation sample; and perform a prediction on the online estimation sample using an online prediction service based on the machine learning model to obtain an online prediction result.

The online prediction request may include partial feature data required by a prediction on a target object, the acquired data may include static feature data, statistical feature data and real-time data, the static feature data does not change or does not change frequently, the statistical feature data is obtained from data within a predetermined period of time by a predetermined statistical manner, the real-time data is generated in real time, and the processing the data acquired using the first processing script may include: performing real-time feature calculation on the real-time data using the first processing script to obtain real-time feature data; performing a calculation on or splicing the real-time feature data, the static feature data, the statistical feature data and the partial feature data included in the online prediction request to obtain the online estimation sample.

The processor may be further configured to: acquire an online feedback result on the online prediction request; splice the online feedback result and feature data obtained by processing data from the offline data storage system using a second processing script to obtain a training sample, the second processing script and the first processing script being obtained by translation based on a same script; and train the machine learning model using the training sample.

The online prediction request includes partial feature data required by a prediction on a target object, the data acquired from the offline data storage system includes static feature data, statistical feature data and real-time data, the static feature data does not change or does not change frequently, the statistical feature data is obtained from data within a predetermined period of time by a predetermined statistical manner, the real-time data is generated in real time and stored in the offline data storage system, and the processing the data acquired from the offline data storage system using the second processing script includes: performing offline feature calculation on the real-time data using the second processing script to obtain real-time feature data; and performing a calculation on or splicing the online feedback result, the real-time feature data, the static feature data, the statistical feature data and the partial feature data included in the online prediction request to obtain the training sample.

The processor is further configured to: verify data acquired from the online prediction request.

Specifically, the computing device may be deployed in a server or a client, or may be deployed on a node device in a distributed network environment. In addition, the computing device may be a personal computer (PC), a tablet device, a personal digital assistant, a smart phone, a web application or other devices capable of executing the above set of instructions.

Here, the computing device does not have to be a single computing device, but also may be any assembly of devices or circuits that can execute the above instructions (or set of instructions) independently or together. The computing device may also be a part of an integrated control system or a system manager, or may be configured as a portable electronic device that interconnects with a local or remote network (e.g., via wireless transmission) through an interface.

In the computing device, the processor may include a central processing unit (CPU), a graphics processing unit (GPU), a programmable logic device, a dedicated processor system, a microcontroller or a microprocessor. As a nonrestrictive example, the processor may also include an analog processor, a digital processor, a microprocessor, a multi-core processor, a processor array, a network processor and the like.

Some operations described in the method for assisting online prediction using a machine learning model according to explanatory embodiments of the present disclosure may be realized by software, and some operations may be realized by hardware. In addition, these operations may also be realized by a combination of the software and hardware.

The processor may run instructions or codes stored in one of the storage components, and the storage component may also be used to store data. Instructions and data may also be sent and received via a network interface device through the network, and the network interface device may adopt any known transmission protocol.

The storage component may be integrated with the processor, for example, a random access memory (RAM) or a flash memory may be arranged in an integrated circuit microprocessor or the like. In addition, the storage component may include independent devices, such as an external disk drive, a storage array, or other storage devices that are available by any database system. The storage component and the processor may be operatively coupled, or may communicate with each other through, for example, I/O ports, network connections, etc., so that the processor can read files stored in the storage component.

In addition, the computing device may also include a video display (such as a liquid crystal display) and a user interaction interface (such as a keyboard, a mouse, a touch input device, and the like). All components of the computing device may be connected to each other via at least one of a bus and a network.

The operations involved in the method for assisting online prediction using a machine learning model according to explanatory embodiments of the present disclosure may be described as various interconnected or coupled functional blocks or functional diagrams. However, these functional blocks or functional diagrams may be equally integrated as a single logical device or operated according to imprecise boundaries.

For example, as described above, the device for assisting online prediction using a machine learning model according to explanatory embodiments of the present disclosure may include the storage component and the processor, the storage component has stored therein a set of computer executable instructions that, when executed by the processor, causes the processor to perform the method for assisting online prediction using a machine learning model as described above.

Various explanatory embodiments of the present disclosure are described above. It should be understood that the above descriptions are only exemplary but not exhaustive, and the present disclosure is not limited to the explanatory embodiments described above. Many modifications and changes are apparent to those ordinarily skilled in the art without departing from the scope and spirit of the present disclosure. Therefore, the protection scope of the present disclosure is defined by the appended claims.

## Claims

1. A method for assisting online prediction using a machine learning model, comprising:
setting an online data storage system and an offline data storage system, wherein the online data storage system is configured to store at least part of data used for feature calculation in an online environment, and the offline data storage system is configured to store at least part of data used for feature calculation in an offline environment;
storing data into each of the online data storage system and the offline data storage system;
acquiring at least part of the data required by online feature calculation from the online data storage system, in response to an online prediction request.

2. The method according to claim 1, wherein at least one of the online data storage system and the offline data storage system is configured to store multiple types of data, and
the method further comprises:
setting a data acquisition manner corresponding to each type of data respectively;
acquiring each type of data using the data acquisition manner corresponding to the type of data.

3. The method according to claim 2, wherein the multiple types of data comprise static feature data, and the static feature data does not change or does not change frequently, and the data acquisition manner corresponding to the static feature data is acquiring the static feature data periodically.

4. The method according to claim 3, wherein the static feature data is stored in a static feature data source, and
the storing data into each of the online data storage system and the offline data storage system comprises:
sending the static feature data in the static feature data source to the online data storage system, which sends the static feature data to the offline data storage system; or
sending the static feature data in the static feature data source to the offline data storage system, which sends the static feature data to the online data storage system; or
sending the static feature data in the static feature data source to each of the online data storage system and the offline data storage system.

5. The method according to claim 2, wherein the multiple types of data comprise statistical feature data, and the statistical feature data is obtained from data within a predetermined period of time, and the data acquisition manner corresponding to the statistical feature data is performing statistic on data within a predetermined period of time to obtain the statistical feature data.

6. The method according to claim 5, wherein the data within the predetermined period of time is stored in a statistical feature data source, and
the storing data into each of the online data storage system and the offline data storage system comprises:
sending the data within the predetermined period of time in the statistical feature data source to the offline data storage system, performing statistic on the data within the predetermined period of time by an offline feature calculation module to obtain the statistical feature data;
storing the statistical feature data to the offline data storage system, and sending the statistical feature data to the online data storage system by the offline data storage system.

7. The method according to claim 2, wherein the multiple types of data comprise real-time data, the real-time data is generated in real time, and the data acquisition manner corresponding to the real-time data is acquiring data generated in real time.

8. The method according to claim 7, wherein the real-time data is stored in a real-time data source, and
the storing data into each of the online data storage system and the offline data storage system comprises:
sending the real-time data in the real-time data source to the online data storage system, which sends the real-time data to the offline data storage system; or
sending the real-time data in the real-time data source to the offline data storage system, which sends the real-time data to the online data storage system; or
sending the real-time data in the real-time data source to each of the online data storage system and the offline data storage system.

9. The method according to claim 1, further comprising:
processing the data acquired using a first processing script to obtain an online estimation sample; and
performing a prediction on the online estimation sample using an online prediction service based on the machine learning model to obtain an online prediction result.

10. The method according to claim 9, wherein the online prediction request comprises partial feature data required by a prediction on a target object, the data acquired comprises static feature data, statistical feature data and real-time data, the static feature data does not change or does not change frequently, the statistical feature data is obtained from data within a predetermined period of time by a predetermined statistical manner, the real-time data is generated in real time, and
the processing the data acquired using the first processing script comprises:
performing real-time feature calculation on the real-time data using the first processing script to obtain real-time feature data;
performing a calculation on or splicing the real-time feature data, the static feature data, the statistical feature data and the partial feature data comprised in the online prediction request to obtain the online estimation sample.

11. The method according to claim 9, further comprising:
acquiring an online feedback result on the online prediction request;
splicing the online feedback result and feature data obtained by processing data from the offline data storage system using a second processing script to obtain a training sample, wherein the second processing script and the first processing script are obtained by translation based on a same script;
training the machine learning model using the training sample.

12. The method according to claim 11, wherein the online prediction request comprises partial feature data required by a prediction on a target object, the data acquired from the offline data storage system comprises static feature data, statistical feature data and real-time data, the static feature data does not change or does not change frequently, the statistical feature data is obtained from data within a predetermined period of time by a predetermined statistical manner, the real-time data is generated in real time and stored in the offline data storage system, and
the processing the data from the offline data storage system using the second processing script comprising:
performing offline feature calculation on the real-time data using the second processing script to obtain real-time feature data; and
performing a calculation on or splicing the online feedback result, the real-time feature data, the static feature data, the statistical feature data and the partial feature data comprised in the online prediction request to obtain the training sample.

13. The method according to claim 12, further comprising:
verifying data acquired from the online prediction request.

14. A device for assisting online prediction using a machine learning model, comprising:
an online data storage system, configured to store at least part of data used for feature calculation in an online environment;
an offline data storage system, configured to store at least part of data used for feature calculation in an offline environment;
a feature data acquiring element, configured to acquire data and store the data into each of the online data storage system and the offline data storage system; and
a real-time feature calculation module, configured to acquire at least part of the data required by online feature calculation from the online data storage system, in response to an online prediction request.

15. The device according to claim 14, wherein at least one of the online data storage system and the offline data storage system is configured to store multiple types of data, and the feature data acquiring element is configured to set a data acquisition manner corresponding to each type of data respectively, and acquire each type of data using the data acquisition manner corresponding to the type of data.

16. The device according to claim 15, wherein the multiple types of data comprise static feature data, and the static feature data does not change or does not change frequently, and the data acquisition manner corresponding to the static feature data is acquiring the static feature data periodically.

17. The device according to claim 16, wherein the feature data acquiring element comprises a static feature data source, and
the static feature data source is configured to acquire the static feature data and send the static feature data to the online data storage system, which sends the static feature data to the offline data storage system; or
send the static feature data to the offline data storage system, which sends the static feature data to the online data storage system; or
send the static feature data to each of the online data storage system and the offline data storage system.

18. The device according to claim 15, wherein the multiple types of data comprise statistical feature data, and the statistical feature data is obtained from data within a predetermined period of time, and the data acquisition manner corresponding to the statistical feature data is performing statistic on data within a predetermined period of time to obtain the statistical feature data.

19. The device according to claim 18, wherein the feature data acquiring element comprises a statistical feature data source, and the statistical feature data source is configured to acquire the data within the predetermined period of time,
wherein the device further comprises an offline feature calculation module,
the statistical feature data source is configured to send the data within the predetermined period of time to the offline data storage system,
the offline feature calculation module is configured to perform statistic on the data within the predetermined period of time from the offline data storage system to obtain the statistical feature data, and store the statistical feature data to the offline data storage system, and
the offline data storage system is configured to send the statistical feature data to the online data storage system.

20. The device according to claim 15, wherein the multiple types of data comprise real-time data, the real-time data is generated in real time, and the data acquisition manner corresponding to the real-time data is acquiring data generated in real time.

21. The device according to claim 20, wherein the feature data acquiring element comprises a real-time data source, and
the real-time data source is configured to acquire the real-time data, and send the real-time data to the online data storage system, which sends the real-time data to the offline data storage system; or
send the real-time data to the offline data storage system, which sends the real-time data to the online data storage system; or
send the real-time data to each of the online data storage system and the offline data storage system.

22. The device according to claim 14, further comprising an online prediction module, wherein
the real-time feature calculation module is configured to process the data acquired using a first processing script to obtain an online estimation sample,
the online prediction module is configured to perform a prediction on the online estimation sample using an online prediction service based on the machine learning model to obtain an online prediction result.

23. The device according to claim 22, wherein the online prediction request comprises partial feature data required by a prediction on a target object, the data acquired comprises static feature data, statistical feature data and real-time data, the static feature data does not change or does not change frequently, the statistical feature data is obtained from data within a predetermined period of time by a predetermined statistical manner, the real-time data is generated in real time, and
the real-time feature calculation module is configured to perform real-time feature calculation on the real-time data using the first processing script to obtain real-time feature data, and perform a calculation on or splice the real-time feature data, the static feature data, the statistical feature data and the partial feature data comprised in the online prediction request to obtain the online estimation sample.

24. The device according to claim 22, further comprising:
a reflowing module, configured to acquire an online feedback result on the online prediction request;
an offline feature calculation module, configured to splice the online feedback result and feature data obtained by processing data from the offline data storage system using a second processing script to obtain a training sample, wherein the second processing script and the first processing script are obtained by translation based on a same script; and
an offline training module, configured to train the machine learning model using the training sample.

25. The device according to claim 24, wherein the online prediction request comprises partial feature data required by a prediction on a target object, the data acquired from the offline data storage system comprises static feature data, statistical feature data and real-time data, the static feature data does not change or does not change frequently, the statistical feature data is obtained from data within a predetermined period of time by a predetermined statistical manner, the real-time data is generated in real time and stored in the offline data storage system, and
the offline feature calculation module is configured to perform offline feature calculation on the real-time data using the second processing script to obtain real-time feature data, and perform a calculation on or splice the online feedback result, the real-time feature data, the static feature data, the statistical feature data and the partial feature data comprised in the online prediction request to obtain the training sample.

26. The device according to claim 25, further comprising:
a verifying module, configured to verify data acquired from the online prediction request.

27. A system, comprising:
at least one computing device; and
at least one storage device having stored therein instructions,
wherein the instructions, when run by the at least one computing device, cause the at least one computing device to execute the method according to any one of claims 1 to 13.

28. A computer-readable storage medium having stored therein instructions that, when run by at least one computing device, cause the at least one computing device to execute the method according to any one of claims 1 to 13.

29. A computing device, comprising:
a processor; and
a memory, having stored therein a set of computer executable instructions,
wherein the set of computer executable instructions, when executed by the processor, causes the processor to:
set an online data storage system and an offline data storage system, wherein the online data storage system is configured to store at least part of data used for feature calculation in an online environment, and the offline data storage system is configured to store at least part of data used for feature calculation in an offline environment;
store data into each of the online data storage system and the offline data storage system;
acquire at least part of the data required by online feature calculation from the online data storage system, in response to an online prediction request.

30. The computing device according to claim 29, wherein at least one of the online data storage system and the offline data storage system is configured to store multiple types of data, and the processor is further configured to:
set a data acquisition manner corresponding to each type of data respectively; and
acquire each type of data using the data acquisition manner corresponding to the type of data.

31. The computing device according to claim 30, wherein the multiple types of data comprise static feature data, and the static feature data does not change or does not change frequently, and the data acquisition manner corresponding to the static feature data is acquiring the static feature data periodically.

32. The computing device according to claim 31, wherein the static feature data is stored in a static feature data source, and
the storing data into each of the online data storage system and the offline data storage system comprises:
sending the static feature data in the static feature data source to the online data storage system, which sends the static feature data to the offline data storage system; or
sending the static feature data in the static feature data source to the offline data storage system, which sends the static feature data to the online data storage system; or
sending the static feature data in the static feature data source to each of the online data storage system and the offline data storage system.

33. The computing device according to claim 30, wherein the multiple types of data comprise statistical feature data, and the statistical feature data is obtained from data within a predetermined period of time, and the data acquisition manner corresponding to the statistical feature data is performing statistic on data within a predetermined period of time to obtain the statistical feature data.

34. The computing device according to claim 33, wherein the data within the predetermined period of time is stored in a statistical feature data source, and
the storing data into each of the online data storage system and the offline data storage system comprises:
sending the data within the predetermined period of time in the statistical feature data source to the offline data storage system, performing statistic on the data within the predetermined period of time by an offline feature calculation module to obtain the statistical feature data;
storing the statistical feature data to the offline data storage system, and sending the statistical feature data to the online data storage system by the offline data storage system.

35. The computing device according to claim 30, wherein the multiple types of data comprise real-time data, the real-time data is generated in real time, and the data acquisition manner corresponding to the real-time data is acquiring data generated in real time.

36. The computing device according to claim 35, wherein the real-time data is stored in a real-time data source, and
the storing data into each of the online data storage system and the offline data storage system comprises:
sending the real-time data in the real-time data source to the online data storage system, which sends the real-time data to the offline data storage system; or
sending the real-time data in the real-time data source to the offline data storage system, which sends the real-time data to the online data storage system; or
sending the real-time data in the real-time data source to each of the online data storage system and the offline data storage system.

37. The computing device according to claim 29, wherein the processor is further configured to:
process the data acquired using a first processing script to obtain an online estimation sample; and
perform a prediction on the online estimation sample using an online prediction service based on the machine learning model to obtain an online prediction result.

38. The computing device according to claim 37, wherein the online prediction request comprises partial feature data required by a prediction on a target object, the data acquired comprises static feature data, statistical feature data and real-time data, the static feature data does not change or does not change frequently, the statistical feature data is obtained from data within a predetermined period of time by a predetermined statistical manner, the real-time data is generated in real time, and
the processing the data acquired using the first processing script comprises:
performing real-time feature calculation on the real-time data using the first processing script to obtain real-time feature data;
performing a calculation on or splicing the real-time feature data, the static feature data, the statistical feature data and the partial feature data comprised in the online prediction request to obtain the online estimation sample.

39. The computing device according to claim 37, wherein the processor is further configured to:
acquire an online feedback result on the online prediction request;
splice the online feedback result and feature data obtained by processing data from the offline data storage system using a second processing script to obtain a training sample, wherein the second processing script and the first processing script are obtained by translation based on a same script; and
train the machine learning model using the training sample.

40. The computing device according to claim 39, wherein the online prediction request comprises partial feature data required by a prediction on a target object, the data acquired from the offline data storage system comprises static feature data, statistical feature data and real-time data, the static feature data does not change or does not change frequently, the statistical feature data is obtained from data within a predetermined period of time by a predetermined statistical manner, the real-time data is generated in real time and stored in the offline data storage system, and
the processing the data from the offline data storage system using the second processing script comprising:
performing offline feature calculation on the real-time data using the second processing script to obtain real-time feature data; and
performing a calculation on or splicing the online feedback result, the real-time feature data, the static feature data, the statistical feature data and the partial feature data comprised in the online prediction request to obtain the training sample.

41. The computing device according to claim 40, wherein the processor is further configured to: verify data acquired from the online prediction request.
